# EUROPÄISCHE PATENTANMELDUNG

(11) **EP 3 379 354 A1**
(43) Veröffentlichungstag der Anmeldung: **26.09.2018**
(21) Anmeldenummer: 17161882.0
(22) Anmeldetag: 20.03.2017
(51) Int. Cl.: G05B 19/418

(54) **VERFAHREN UND VORRICHTUNG ZUR AUTOMATISIERTEN BEARBEITUNG VON ZAHNRAD-BAUTEILEN**

(71) Anmelder: Klingelnberg AG, 8050 Zürich (CH)
(72) Erfinder: Schenk, Thomas, 96450 Coburg (DE); Vogel, Olaf, 76275 Ettlingen (DE)
(74) Vertreter: Heusch, Christian

(57) **Zusammenfassung**

Fertigungsumgebung (100) mit einer Bearbeitungsmaschine (M.m), einer Messvorrichtung oder Messmaschine (20), einem Speichermedium (11), und mit einem Rechner(10), der zum Steuern der folgenden Verfahrensschritte der Fertigungsumgebung (100) programmiert ist:
a) spanendes Bearbeiten eines ersten Werkstücks (W.n) in der Bearbeitungsmaschinen (M.m),
b) Erfassen von Maschinenparametern (Mp_{W.n}) der Bearbeitungsmaschine (M.m) während der spanenden Bearbeitung des ersten Werkstücks (W.n),
c) Speichern dieser Maschinenparameter (Mp_{W.n}) in dem Speichermedium (11), wobei das Speichern unter Zuordnung zu dem ersten Werkstück (W.n) erfolgt,
d) Wiederholen der Schritte a) bis c) für eine Anzahl von n Werkstücken (W.n); nach einem der Schritte a) bis d), oder zu einem späteren Zeitpunkt, Auslösen eines Prüfverfahrens mit den folgenden Schritten:
M1. Auswahl mindestens eines der Werkstücke (W.n),
M2. Durchführen einer automatisierten Prüfung mindestens dieses einen ausgewählten Werkstücks (W.n) durch die Messvorrichtung oder die Messmaschine (20),
M3. Durchführen einer prozessorgesteuerten Bewertung der automatisierten Prüfung, um das ausgewählte Werkstück (W.n) in eine von mindestens zwei der folgenden Gruppen einteilen zu können: Gut-Teil (GT), Ausschuss-Teil (AT).

## Beschreibung

Die Erfindung betrifft ein Verfahren und Vorrichtungen zur automatisierten Bearbeitung von Zahnrad-Bauteilen.

### HINTERGRUND DER ERFINDUNG

Es ist bekannt, dass heutige Produktions- und Bearbeitungsabläufe immer komplexer werden. Vor allem in der Serienfertigung gilt ein besonderer Augenmerk der Reduktion des Ausschusses und damit der Verbesserung des Durchsatzes.

Die Bearbeitung von Zahnrädern findet teilweise in einer Fertigungsumgebung statt, die zusätzlich zu der eigentlichen Bearbeitungsmaschine auch eine Messmaschine umfasst. Durch eine geeignete Rückkopplung zwischen der Messmaschine und der Bearbeitungsmaschine kann schnell reagiert werden, falls Abweichungen auftreten. Diese Ansätze werden zum Teil als closed-loop Verfahren bezeichnet.

Das Dokument DE102014015587 A1 beschreibt zum Beispiel eine dynamische Mess- und Korrekturstrategie zur Überwachung bzw. Korrektur eines Fertigungsprozesses (Serienfertigung). Dieses Dokument sieht das Messen von Maschinenparametern vor, um anhand gemessener Werte Rückschlüsse auf den aktuellen Fertigungsprozess zu ermöglichen.

Es hat sich jedoch gezeigt, dass die technischen Zusammenhänge derart komplex sind, dass eine einfache, aber isolierte Betrachtung einzelner Maschinenparameter, wie dies in dem bereits genannten Dokument der Fall ist, keine Antwort für die Festlegung von Sollwerten und/oder Bewertungskriterien liefert.

Konkret hat sich ergeben, dass fertigungskritische Betriebszustände, die zu Ausschuss-Werkstücken führen, in der Regel nicht durch eine isolierte Betrachtung einzelner Maschinenparameter zu erkennen sind.

Oft sind vor allem die kausalen Zusammenhänge, warum bestimmte Betriebszustände zu geeigneten oder ungeeigneten Werkstücken führen, nicht bekannt und auch nicht greifbar. Ohne dieses Wissen kann ein entsprechendes Bearbeitungsverfahren aber kaum sinnvoll genutzt oder gar optimiert werden.

Es ist daher eine Aufgabe der Erfindung eine Vorrichtung und ein entsprechendes Verfahren bereit zu stellen, die es ermöglichen den Durchsatz bei der maschinellen Bearbeitung von Zahnrad-Bauteilen zu erhöhen, ohne Abstriche in Sachen Qualität machen zu müssen.

Die Aufgabe wird durch ein Verfahren gemäß Anspruch 1 und durch eine Vorrichtung gemäß Anspruch 13 gelöst.

Die Erfindung setzt dabei auf die kombinierte Betrachtung von zwei oder mehr als zwei Maschinenparametern, wobei anhand von Korrelationen fertigungskritische Zustandskombinationen erkennbar und nutzbar gemacht werden.

Gemäß Erfindung werden vorzugsweise vor, während (d.h. on-the-fly bzw. prozessbegleitend) oder nach der Bearbeitung eines Werkstücks zwei oder mehr als zwei Maschinenparameter dieses Werkstücks erfasst und gespeichert. Die Maschinenparameter mehrerer bearbeiteter Werkstücke dienen als Grundlage einer Wissensbasis.

Erst eine Zustandskombination mehrerer Maschinenparameter und die Ermittlung von Korrelationen ermöglichen eine sichere und zielgerichtete Beurteilung einzelner Werkstücke während oder nach deren Bearbeitung.

Geeignete Korrelationen lassen sich beim Verfahren und bei den Vorrichtungen der Erfindung dann finden, wenn zusätzlich zu den Maschinenparametern, die für jedes Werkstück erfasst und gespeichert werden, auch mindestens für einen Teil der Werkstücke Messergebnisse, die in einer Messvorrichtung oder -maschine erfasst wurden, gespeichert werden. Erst die Zusammenschau der Maschinenparameter eines Werkstücks und der Messergebnisse für dieses Werkstück, ermöglichen das automatisierte Auffinden geeigneter Korrelationen.

Die Erfindung setzt vorzugsweise bei allen Ausführungsformen auf Maschinenparameter, die einen indirekten Bezug zum entsprechenden Werkstück haben, und auf konkrete Messungen am Werkstück selbst. Auf diesem Wege wird eine Datenbasis - hier als Wissensbasis bezeichnet - aufgebaut und zur Verfügung gestellt.

Da eine Festlegung fertigungskritischer Zustandskombinationen, die beim Verfahren und bei den Vorrichtungen der Erfindung bei Erkennen ein Auslösen von Mess- und/oder Korrekturzyklen nach sich ziehen sollten, aufgrund der Vielschichtigkeit nicht durch analytische Betrachtungen zu bewerkstelligen ist, setzt die Erfindung auf Korrelationsbetrachtungen und das Auswerten grösserer Datenmengen.

Diese Wissensbasis wird vorzugsweise mit der Zeit immer weiter auf- und ausgebaut. Die Wissensbasis kann aber auch ab Werk mit einem grundlegenden Datensatz versehen werden, damit das Verfahren der Erfindung bereits ab dem ersten bearbeiteten Werkstück zum Einsatz kommen kann.

Gemäss Erfindung kommt die Wissensbasis produktionsbegleitend zum Einsatz, um eine automatisierte Bewertung von Werkstücken vornehmen zu können. Falls eine solche Bewertung ergibt, dass aufgrund der Maschinenparameter, die für ein soeben bearbeitetes Werkstück erfasst wurden, dieses Werkstück mit grosser Wahrscheinlichkeit in Ordnung ist (da es z.B. einer Werkstückspezifikation entspricht oder genügt), so wird dieses Werkstück z.B. als Gut-Teil eingestuft. Falls dieses Werkstück hingegen mit grosser Wahrscheinlichkeit nicht in Ordnung ist, so wird dieses Werkstück entweder direkt als Ausschuss-Teil eingestuft, oder es wird zwecks (Ver-)Messung einer Messvorrichtung oder -maschine übergeben.

Werkstücke, die nicht klar als Gut- oder Ausschuss-Teil zu erkennen sind, werden bei bevorzugten Ausführungsformen zwecks (Ver-)Messung einer Messvorrichtung oder -maschine übergeben.

Die Verwendung der Begriffe "Gut-Teil" und "Ausschuss-Teil" soll nicht eng ausgelegt werden. Ein Ausschuss-Teil ist im Sinne der Erfindung ein Werkstück, das wegen Nicht-Erreichen einer geforderten Genauigkeitsanforderung (Spezifikation genannt) nicht ohne Korrektur für seinen Bestimmungszweck verwendet werden kann. Ein Ausschuss-Teil ist somit ein Werkstück, das einen erfindungsgemäßen Korrektureingriff in den Prozess erfordert. Ein Gut-Teil ist im Sinne der Erfindung hingegen ein Werkstück, das keinen Korrektureingriff in den Prozess erfordert.

Gemäß Erfindung kann bei allen Ausführungsformen auch mit zwei unterschiedlichen Toleranzfeldern gearbeitet werden, wir folgt. Ein erstes größeres Toleranzfeld kommt bei diesen Ausführungsformen für die Unterscheidung zwischen Gut- und Ausschussteilen zur Anwendung. Ein zweites engeres Toleranzfeld kommt bei diesen Ausführungsformen für die Unterscheidung zwischen Korrekturbedarf (d.h. es wird ein Korrektureingriff in den Prozess vorgenommen) und keinem Korrekturbedarf (d.h. es wird kein Korrektureingriff in den Prozess vorgenommen) zum Einsatz. Wird das engere Toleranzfeld für die Verfahrensregelung genutzt, kommt es idealerweise nie zu einer Verletzung der äußeren Toleranz bzw. zu wirklichen Ausschussteilen.

Das Durchführen eines Messverfahrens in der Messvorrichtung oder -maschine dient einerseits dazu, um in unsicheren Bewertungssituationen Klarheit zu schaffen. In diesem Fall kann das betroffene Werkstück endgültig und eindeutig als Gut-Teil oder als Ausschuss-Teil eingestuft werden. Andererseits dient das Messverfahren gemäß Erfindung auch zum Ausbau der Wissensbasis. Dies wird gemäß Erfindung dadurch erreicht, dass die Maschinenparameter eines Werkstücks mit dem Ergebnis des Messverfahrens dieses Werkstücks zusammengeführt und dann zur späteren Verwendung ausgewertet oder aufbereitet werden.

Die Maschinenparameter und die Ergebnisse des Messverfahrens werden vorzugsweise bei allen Ausführungsformen der Erfindung zum Zwecke der Korrelation verwendet. Anhand eines oder mehrerer Korrelationsverfahren wird automatisch nach möglichen Korrelationen gesucht.

In nachfolgenden Schritten können bereits vorhandene Korrelationen weiter verbessert (im Sinne von untermauert) oder verworfen werden.

Vorzugsweise werden bei allen Ausführungsformen Bewertungskriterien aus den Korrelationen der Wissensbasis abgeleitet. Diese Bewertungskriterien kommen dann in der entsprechenden Fertigungsumgebung bei der Bearbeitung weiterer Werkstücke zur Anwendung. Auf diese Art und Weise können Gut-Teile und Ausschuss-Teile schneller und zuverlässiger unterschieden werden.

Vorzugsweise kommt bei allen Ausführungsformen ein Korrekturverfahren zur Anwendung, das bei Bedarf in den Bearbeitungsprozess eingreift oder das Anpassungen oder Änderungen der Bearbeitungsmaschine vornimmt.

Vorzugsweise sind bei allen Ausführungsformen die aktiven Korrekturwerte, die bei der Bearbeitung eines Werkstücks aktuell zum Einsatz kommen, als Maschinenparameter zu verstehen. Diese aktiven Korrekturwerte werden vorzugsweise bei allen Ausführungsformen in einer Wissensbasis gespeichert.

Die Erfindung basiert auf der Erkenntnis, dass bei einer Betrachtung vieler Maschinenparameter und ggf. auch mehrerer Bewertungskriterien eine vollfaktorielle Betrachtung aller Zustands- und Bewertungskombinationen sehr aufwendig sein kann. Ebenso ist das in den Daten steckende "Wissen" in dieser Form weder für den Bediener einer Bearbeitungsmaschine greifbar noch für einen Experten zu analysieren. Moderne Methoden der Datenanalyse erlauben jedoch, Wissen "greifbarer" und damit auch technisch nutzbar zu machen.

Die Erfindung macht es möglich, die Wahrscheinlichkeit, dass eine bestimmte Zustandskombination bestimmter Maschinenparameter zu einer konkreten Bewertung oder Bewertungskombination führt, zu bestimmen. Anhand dieser Wahrscheinlichkeiten kann dann für auftretende Zustände oder Zustandskombinationen bestimmt werden, ob Messungen eines soeben bearbeiteten Werkstücks oder ob Korrekturen des Bearbeitungsverfahrens erforderlich sind.

Umgekehrt kann aber auch bestimmt werden, mit welcher Wahrscheinlichkeit eine bestimmte Zustandskombination vorlag, wenn eine bestimmte Bewertung (über Messung oder Prognose) ermittelt wurde. Dieses Vorgehen ist hilfreich, wenn rein anhand der aufgebauten Wissensbasis Korrekturmaßnahmen ergriffen werden sollen.

Die Erfindung bietet den Vorteil, daß der Messaufwand gegenüber der üblichen Stichprobenmessung, die in einem fest definierten Intervall erfolgt, geringer ist.

Vorteilhafte Ausgestaltungen der erfindungsgemäßen Koordinaten-Messvorrichtung und des Verfahrens sind den abhängigen Ansprüchen zu entnehmen.

### ZEICHNUNGEN

Ausführungsbeispiele der Erfindung werden im Folgenden unter Bezugnahme auf die Zeichnungen näher beschrieben.
- **FIG. 1**: zeigt eine schematische Ansicht einer spanabhebenden Maschine, einer Messmaschine und eines Rechners, wobei die genannten Komponenten kommunikationstechnisch miteinander verbunden sind;
- **FIG. 2**: zeigt ein schematisches Flussdiagramm, das Grundzüge des Verfahrens des Erfindung darstellt;
- **FIG. 3**: zeigt ein schematisches, beispielhaftes Temperatur-Zeitdiagram, das während der spanenden Bearbeitung eines Werkstücks W.1 als ein Maschinenparameter aufgezeichnet wurde;
- **FIG. 4**: zeigt ein schematisches, beispielhaftes Frequenz-Zeitdiagram, das während der spanenden Bearbeitung des Werkstücks W.1 der Fig. 3 als ein weiterer Maschinenparameter aufgezeichnet wurde;
- **FIG. 5**: zeigt ein schematisches Diagramm mit beispielhaften Maschinenparametern, wobei ein erster Maschinenparameter P1 in drei Gruppen A, B, C und ein zweiter Maschinenparameter P2 in zwei Gruppen 1 und 2 unterteilt und die Maschinenparameter diesen Gruppen zugeordnet wurden;
- **FIG. 6**: zeigt ein schematisches Flussdiagramm, das auf Fig. 2 aufbaut und das Grundzüge eines weiteren Verfahrens des Erfindung darstellt;
- **FIG. 7**: zeigt ein schematisches Flussdiagramm, das auf Fig. 2 und Fig. 6 aufbaut und das Grundzüge eines weiteren Verfahrens des Erfindung darstellt.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es geht hier unter anderem um spanabhebende Maschinen M.m, wie sie z.B. bei der Bearbeitung von Zahnrad-Werkstücken zum Einsatz kommen. Das Bezugszeichen M.m soll andeuten, dass die Erfindung in einer Fertigungsumgebung 100 Anwendung finden kann, die mindestens zwei baugleiche spanabhebende Maschinen M.m oder zwei unterschiedliche spanabhebende Maschinen M.m umfassen kann. m ist hier eine ganze Zahl grösser gleich 1.

Die Erfindung ist insbesondere zur Anwendung in einer Fertigungsumgebung 100 für die Bearbeitung von Zahnrädern ausgelegt und optimiert worden.

Der Begriff "Messmaschine" wird hier für separate Maschinen verwendet. Der Begriff "Messvorrichtung" soll hingegen andeuten, dass diese Vorrichtung z.B. in die Maschine M.m integriert oder an diese angebaut sein kann.

Als "Software SW" wird hier eine Codesequenz bezeichnet, die direkt von einem Rechner oder Prozessor ausführbar ist, oder die vor dem Ausführen in einen Maschinencode umgesetzt werden muss, um dann vom Rechner oder Prozessor ausgeführt werden zu können. Die Software SW kann bei allen Ausführungsformen als ein Software-Produkt (z.B. als Anwendungssoftware) bereitgestellt werden, das vor dem Ausführen z.B. auf einem Rechner installiert wird. Die Software SW kann aber auch modular aufgebaut und/oder an mehreren Orten (z.B. in dem Rechner 11, der Maschine M.m und der Messmaschine 20) installiert sein.

Der Begriff "Rechner 10" steht hier als Synonym für eine mikroprozessor-gesteuerte Vorrichtung, für Mikrocomputer, prozessor-gesteuerte Anlagen oder Anlagenteile, für eine Maschinensteuerung und auch für Computer, die z.B. separat von der Maschine M.m ausgeführt sein können.

Als Maschinenparameter Mp_{w.n} werden hier Größen, Werte oder Informationen betrachtet, die einen Bezug zu jeweils einem Werkstück W.n haben und die in oder an der Maschine M.m erfasst wurden. Im Folgenden ist eine Auflistung einiger Beispiele gegeben, wobei diese Auflistung nicht vollständig ist:
- Temperatur an einer oder mehreren Punkten der Maschine M.m,
- Temperatur des Werkstücks W.n,
- Umgebungsbedingungen (wie z.B. Temperatur, Luftdruck, Luftfeuchte, Sonneneinstrahlung auf die Maschine M.m, etc.)
- Drehzahl einer Spindel der Maschine M.m,
- Position und/oder Bewegung einzelner Achsen der Maschine M.m,
- Last oder Belastung einzelner Achsen der Maschine M.m,
- Unwucht einer Spindel der Maschine M.m,
- Exzentrizität,
- Körperschall (z.B. zum Aufnehmen von Vibrationen),
- Stromaufnahme des Antriebs einer Achse der Maschine M.m,
- Drehmoment.

Als Maschinenparameter Mp_{w.n} können hier auch prozessbegleitende Größen dienen, wie z.B. die Anzahl von Starts der Maschine M.m seit Produktions- oder Schichtbeginn, die fortlaufende Nummer n der bearbeiteten Werkstücke W.n (z.B. seit dem letzten Werkzeugwechsel), usw.

Die Maschinenparameter Mp_{w.n} sind individuelle Angaben, die einem Werkstück W.n zugeordnet sind. Es handelt sich um Angaben, die jedoch nur einen indirekten Bezug zum Werkstück W.n haben, da sie nur eine Zustandsaussage, wie z.B. die Temperatur des Werkstücks W.n, oder dergleichen enthalten.

Die Maschinenparameter Mp werden hier mit Mp_{w.n} bezeichnet, um anzudeuten, dass diese einen Bezug zum jeweiligen Werkstück W.n haben. Dieser Bezug kann bei allen Ausführungsformen z.B. durch eine einzigartige Identifizierung (unique ID oder uID) des Werkstücks gegeben sein.

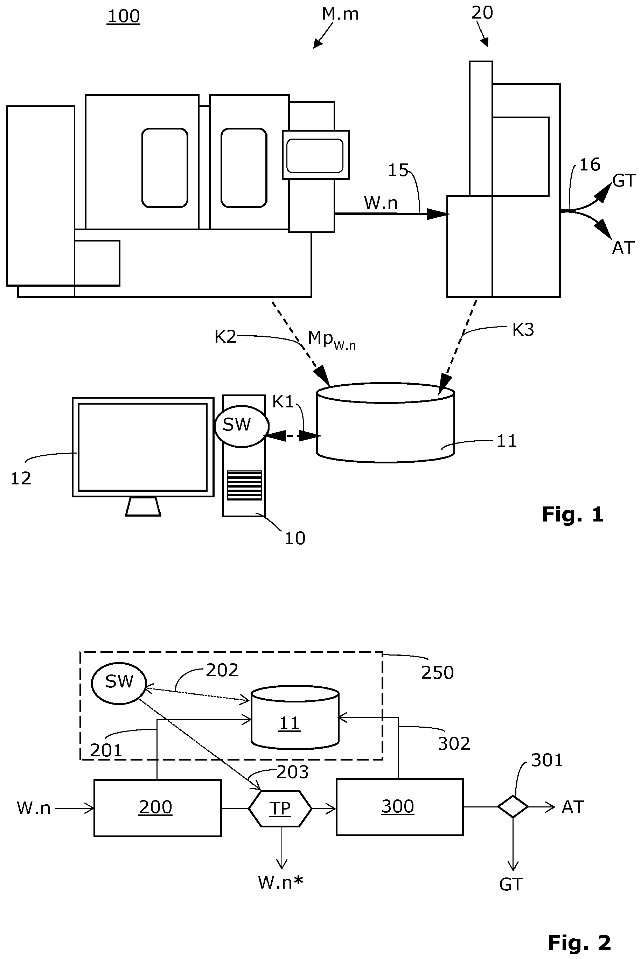

Eine vorteilhafte Ausführungsform der Erfindung wird im Folgenden anhand der Figuren 1 und 2 beschrieben. Fig. 1 zeigt in schematischer Form eine beispielhafte Vorrichtung 100, die hier eine erste spanabhebende Maschine M.m, eine Messmaschine 20 und einen Rechner 10 umfasst. Bevor weitere Details beschrieben werden, ist anzumerken, dass in Fig. 1 die Kommunikationsverbindungen als strichlierte Pfeile und die Handhabungseinrichtungen oder - mittel, die z.B. zur Übergabe eines Werkstücks W.n dienen, als dicke durchgezogene Pfeile dargestellt sind.

In Fig. 2 hingegen, werden Verfahrensschritte und Verzweigungen des Verfahrens als durchgezogene Pfeile gezeigt. Die übergeordnete Kontrolle oder Beeinflussung, die im Ausführungsbeispiel der Fig. 2 beispielsweise durch eine Software SW ausgeübt wird, ist durch punktierte Pfeile dargestellt.

Es geht hier um eine produktionsbegleitende Verarbeitung von Daten und Informationen, um den technischen Ablauf des Bearbeitungsprozesses 200 effizienter zu gestalten, den Ausschuss zu reduzieren und die Fertigung zu optimieren.

Daher ist die eigentliche Bearbeitung (Verfahren 200) von Werkstücken W.n lediglich ein Teilaspekt der Erfindung.

Es geht hier konkret um Verfahren 200 zur automatisierten, spanabhebenden Bearbeitung von mehreren Werkstücken W.n, wobei n eine ganze Zahl grösser gleich 2 ist. Das Verfahren 200 umfasst die folgenden Schritte, wobei diese Schritte zumindest teilweise gleichzeitig oder zeitlich überlappend ausgeführt werden können:
a) Es erfolgt die spanende Bearbeitung eines ersten Werkstücks W.n in einer Bearbeitungsmaschine M.m (siehe Fig. 1).
b) Während dieser Bearbeitung des ersten Werkstücks W.n werden mindestens 2 Maschinenparameter Mp_{w.n} der Bearbeitungsmaschine M.m erfasst, was bei allen Ausführungsformen z.B. mit Sensoren der Bearbeitungsmaschine M.m und/oder mit externen Mitteln erfolgen kann.
c) In einem weiteren Schritt werden diese Maschinenparameter Mp_{w.n} unter Zuordnung zu dem ersten Werkstück W.n gespeichert. Die Maschinenparameter Mp_{w.n} können bei allen Ausführungsformen z.B. in einer zentralen Datenbank 11 abgelegt werden. Hier wird das Bezugszeichen 11 sowohl für die Datenbank als auch für das Speichermedium verwendet, da die eigentliche Organisation und Partitionierung für die Erfindung unerheblich ist. Es ist selbstredend, dass die Maschinenparameter Mp_{w.n} auch an verschiedenen Orten und/oder in verschiedenen Speichermedien gespeichert sein können. In Fig. 1 ist die Übergabe der Maschinenparameter Mp_{w.n} zum Zwecke des Speicherns durch die Kommunikationsverbindung K2 symbolisiert.
d) Diese Schritte a) bis c) werden (z.B. im Rahmen einer Serienproduktion) für eine Anzahl von n Werkstücken W.n wiederholt. Das Bearbeiten eines Werkstücks W.n ist in Fig. 2 durch den Block 200 dargestellt und die Übergabe von Maschinenparametern Mp_{w.n} zum Zwecke des Speicherns wird durch den Pfeil 201 symbolisiert.

Gemäß Erfindung wird nach einem der Schritte a) bis d), oder zu einem späteren Zeitpunkt, die Durchführung eines Messverfahrens 300 ausgelöst, das mindestens die im Folgenden beschriebenen Schritte M1 - M3 umfasst. In Fig. 1 wird entsprechend ein Werkstück W.n von der Bearbeitungsmaschine M.m an eine Messmaschine 20 übergeben. Die Übergabe (dargestellt durch den Pfeil 15) des Werkstücks W.n kann manuell oder automatisch erfolgen (z.B. durch ein Fördersystem oder durch einen Roboter).

In Fig. 2 ist ein Triggerpunkt TP gezeigt, der als eine Art Weiche oder Verzweigung zu verstehen ist. Dieser Triggerpunkt TP soll im Flussdiagramm symbolisieren, dass ein Werkstück W.n nach der Bearbeitung 200 entweder an ein Messverfahren 300 übergeben wird, oder dass es als ungeprüftes Werkstück W.n* aus der Produktion entnommen wird. Auf diesen Punkt wird später noch eingegangen. Der Triggerpunkt TP kann bei allen Ausführungsformen beispielsweise durch die Software SW überwacht und/oder geschaltet werden, wie in Fig. 2 durch den Pfeil 203 angedeutet.

Im Folgenden werden die Schritte M1 - M3 näher beschrieben, wobei auch hier Bezug auf die beispielhaften Figuren 1 und 2 genommen wird.
M1. Es wird mindestens eines der Werkstücke W.n ausgewählt, für das zuvor mindestens 2 Maschinenparameter Mp_{w.n} erfasst und gespeichert wurden. Diese Auswahl kann unmittelbar nach dem spanenden Bearbeiten (Verfahren 200) des Werkstücks W.n erfolgen, es ist aber auch möglich das Werkstück W.n z.B. in eine Zwischenablage zu übergeben und dann später auszuwählen.
M2. Es wird eine automatisierte Prüfung (z.B. eine Messung 300 oder eine Prüfung anhand einer Wissensbasis) mindestens dieses einen ausgewählten Werkstücks W.n in der Messmaschine 20 durchgeführt.
M3. Nach oder während des Prüfens wird eine prozessorgesteuerte Bewertung vorgenommen, um das ausgewählte Werkstück W.n in eine von mindestens zwei Gruppen einteilen zu können. Vorzugsweise wird das ausgewählte Werkstück W.n nach der automatisierten Prüfung als Gut-Teil GT oder als Ausschuss-Teil AT eingestuft. Diese Einstufung ist in Fig. 1 durch zwei verzweigende Pfeile 16 symbolisiert. In Fig. 2 deutet eine Raute 301 an, dass die Werkstücke W.n nach der automatisierten Prüfung 300 als Gut-Teil GT oder als Ausschuss-Teil AT eingestuft werden. Falls eine automatisierte Messung als automatisierte Prüfung vorgenommen wird, kann das/die Messergebnisse der Messung 300 in einer Datenbank 11 abgelegt werden, wie in Fig. 1 durch die Kommunikationsverbindung K3 und in Fig. 2 durch den Pfeil 302 dargestellt.

Die Software SW kann bei allen Ausführungsformen zusammen mit der Datenbank 11 eine Art Metaebene 250 bilden, wie in Fig. 2 angedeutet, die dem eigentlichen Bearbeitungsverfahren 200 und/oder dem Prüf- bzw. dem Messverfahren 300 übergeordnet ist.

Die Software SW kann bei allen Ausführungsformen, wie in Fig. 2 durch den Doppelpfeil 202 gezeigt, Daten in der Datenbank 11 ablegen, organisieren (z.B. mittels Data-Mining oder geeigneter Korrelationsverfahren) und/oder Daten aus der Datenbank 11 laden.

Das Bearbeitungsverfahren 200 und/oder das Messverfahren 300 kann bei allen Ausführungsformen unabhängig sein von dem Verfahren der Erfindung, das im Wesentlichen dazu dient gezielte Eingriffe oder Anpassungen vorzunehmen, um Optimierungspotential auszuschöpfen.

Anhand der beiden Figuren 1 und 2 wurde das Grundprinzip der Erfindung beschrieben. Im Folgenden werden weitere Details erklärt und Ausführungsbeispiele erläutert.

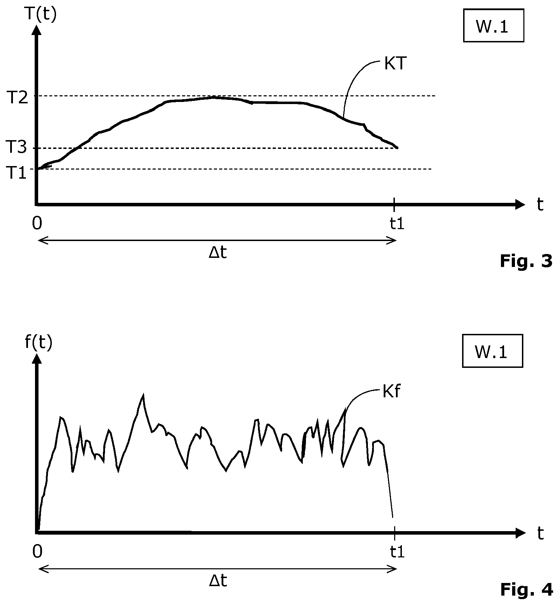

Es werden, wie bereits erwähnt, während der Bearbeitung eines Werkstücks W.n (hier das Werkstück W.1) mindestens 2 Maschinenparameter Mp_{w.n} der Bearbeitungsmaschine M.m erfasst. In den Figuren 3 und 4 ist der Zeitverlauf zweier beispielhafter Signale gezeigt, die während der Bearbeitung des Werkstücks W.1 erfasst wurden. Diese beiden Signale wurden zeitlich synchron aufgezeichnet.

In Fig. 3 ist der Temperaturverlauf T(t) gezeigt, der sich während der spanenden Bearbeitung des Werkstücks W.1 z.B. an der Werkstückspindel der Maschine M.m ergibt. Die Bearbeitung beginnt zum Zeitpunkt t=0 und endet zum Zeitpunkt t=t₁. Die Bearbeitungsdauer beträgt Δt = t1 - 0. Der Temperaturverlauf T(t), der hier durch eine Kurve KT dargestellt ist, beginnt bei einer Temperatur T1 und erreicht nach etwa der halben Bearbeitungszeit ein Maximum T2. Danach nimmt die Temperatur leicht ab. Das Werkstück W.1 verlässt die Maschine M.m mit einer End-Temperatur T3, die etwas höher liegt als die ursprüngliche Temperatur T1.

In Fig. 4 ist ein Frequenzsignal f(t) gezeigt, das während der spanenden Bearbeitung des Werkstücks W.1 z.B. an der Werkzeugspindel der Maschine M.m mittels eines Schwingungssensors gemessen wurde. Das Frequenzsignal f(t), das hier durch eine Kurve Kf dargestellt ist, beginnt und endet bei 0 Hz. Das Signal zeigt starke Schwankungen. Das Frequenzsignal f(t) enthält Schwingungen und andere Vibrationen der Maschine M.m.

Im Rahmen der vorliegenden Erfindung werden diese beispielhaften Signale T(t) und f(t) vorzugsweise aufbereitet oder ausgewertet (vorzugsweise durch einen Prozessor und/oder ein Software-Modul), bevor sie in der Datenbank 11 abgelegt werden. Dieser Punkt kann kritisch sein, da man beim Aufbereiten oder Auswerten Gefahr läuft wichtige Informationen, die in den Signalen "enthalten" oder codiert sind, zu verlieren. Auf der anderen Seite geht es hier jedoch nicht um eine Echtzeitüberwachung eines Bearbeitungsverfahrens. Es geht vielmehr um das Sammeln von charakteristischen Maschinenparametern Mp_{w.n} während der Bearbeitung mehrerer Werkstücke W.n, um auf diesem Weg eine produktionsbegleitende Bewertung zu ermöglichen.

Bei einem Temperatursignal, wie z.B. durch die Kurve KT der Fig. 3 dargestellt, kann es z.B. ausreichend sein, wenn nach einer geeigneten Rechenvorschrift aus der Kurve KT der Mittelwert K̅T̅ gebildet wird. Sollte im Laufe der spanenden Bearbeitung mehrerer Werkstücke W.1, W.2, W.3 usw. die Temperatur T in der Maschine M.m ansteigen, so wäre dies anhand eines Anstiegs der Mittelwerte zu erkennen.

Bei einem Frequenzsignal, wie z.B. durch die Kurve Kf der Fig. 4 dargestellt, gibt es zahlreiche Möglichkeiten zum Aufbereiten und/oder Auswerten. Im Rahmen der Erfindung kann z.B. eine Umwandlung des Zeitsignals f(t) in einen Frequenzbereich vorgenommen werden. Will man z.B. Störgrössen ermitteln (z.B. eine Unwucht der Werkstückspindel der Maschine M.m), so kann man im Zeitbereich z.B. bereits bekannte Frequenzbänder herausfiltern, um z.B. Signalanteile auszublenden und von der späteren Betrachtung auszuschliessen, die eindeutig z.B. von elektrischen Motoren der Maschine M.m stammen. Um nun z.B. störende Vibrationen zu erfassen, können nach einer geeigneten (Fourier-) Transformation die Oberwellen ausgewertet und das Ergebnis der Auswertung gespeichert werden.

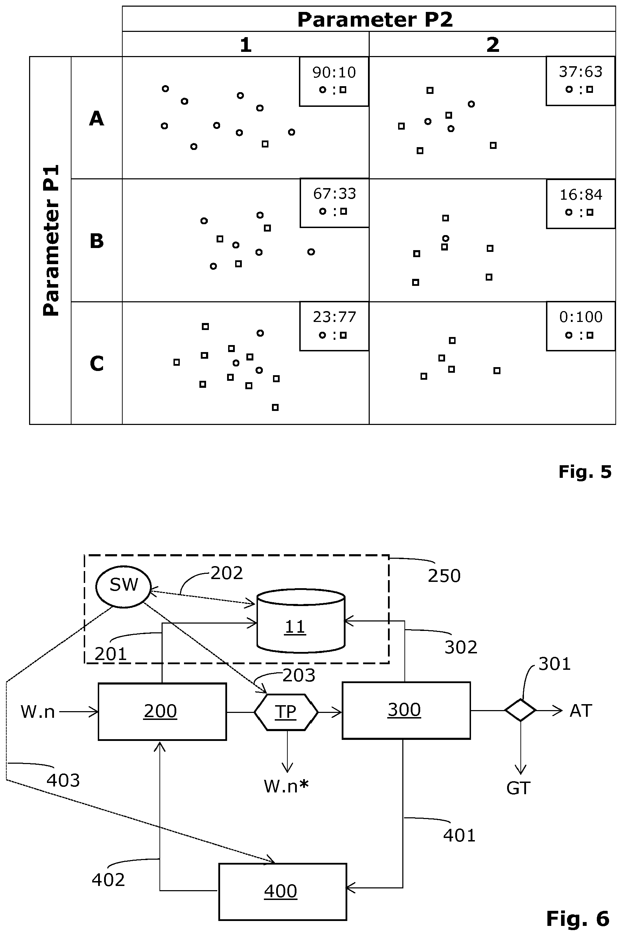

Die Fig. 5 zeigt ein schematisches Diagramm mit zwei beispielhaften Maschinenparametern, wobei ein erster Maschinenparameter P1 in drei Gruppen A, B, C und ein zweiter Maschinenparameter P2 in zwei Gruppen 1 und 2 unterteilt wurde. Diese Gruppen können auch als Zustandsintervalle betrachtet werden. Die verschiedenen Werkstücke W.n wurden in die Gruppen Gut-Teile GT und Ausschuss-Teile AT unterteilt (hier kann auch eine Unterteilung in andere Gruppen erfolgen). Um die Gut-Teile GT von den Ausschuss-Teilen AT optisch unterscheiden zu können, sind diese in Form von Kreisen (für GT) und Quadraten (für AT) gezeigt. Beim Bewerten und Einteilen der Maschinenparameter wurde hier nur ein einziges Bewertungskriterium BK verwendet, das es ermöglicht die betroffenen Werkstücke W.n in Gut-Teile GT und Ausschuss-Teile AT zu unterteilen.

Die verschiedenen Zustandskombinationen entsprechen im Beispiel der Fig. 5 den dort gezeigten Zustandsboxen (Felder in der tabellarischen Grafik der Fig. 5). Jede der Zustandsboxen kann z.B. anhand einer Anzahl der in diese fallenden Gut-Teile GT und Ausschuss-Teile AT charakterisiert werden. Die Zustandsbox A1 beinhaltet beispielweise 90% Gut-Teile GT. Die Zustandsbox C2 beinhaltet beispielweise 100% Ausschuss-Teile AT.

Es kann bei einer solchen Zuordnung z.B. Zustandsboxen geben, in die nur wenige oder gar keine Werkstücke fallen (siehe Zustandsbox C2).

Je mehr gemessene (bewertete) Werkstücke W.n für eine Zustandsbox vorliegen, desto besser kann für einen konkreten Zustand der Maschine M.m (der wiederum anhand der Maschinenparameter erkennbar ist), der in diese Zustandsbox fällt, eine Aussage über die momentane Fertigungsqualität prognostiziert werden.

Die Auflösung der Wertebereiche in Intervalle kann bei allen Ausführungsformen am Anfang grob gewählt werden und im Laufe der Datenerfassung adaptiv verfeinert werden. So kann sich z.B. in einer Zustandsbox ein konstantes Verhältnis von 40:60 einstellen, welches für Bewertungen von Werkstücken W.n ungünstig ist, während eine Teilung zu einem Verhältnis von 80:20 in einer neuen Zustandsbox und 10:90 in der anderen führen könnte. Eine solche Verfeinerung der Unterteilung von Zustandsboxen muss jedoch nicht immer zu einer verbesserten Bewertung führen.

Es kann bei allen Ausführungsformen auch von Anfang an eine feine Auflösung der Zustandsboxen vorgegeben werden, die dann im Laufe der Datenerfassung (nach Messung weiterer Werkstücke W.n) adaptiv durch Zusammenlegen von benachbarten Zustandsboxen mit gleicher Aussage vergröbert wird.

Die im Zusammenhang mit Fig. 5 beschriebene Bewertung bzw. Unterteilung ist als eine beispielhafte Korrelation zwischen Zustandskombinationen und Bewertungen (Bewertungskombinationen) zu verstehen. Es gibt zahlreiche andere Möglichkeiten zur Korrelation der verschiedenen Maschinenparameter mit den Messergebnissen des Messverfahrens 300. Das Wort "Korrelation" wird hier verwendet, um zum Ausdruck zu bringen, dass es bei der Erfindung um das Erkennen von Beziehungen zwischen den verschiedenen Maschinenparametern und Messergebnissen geht. Dabei geht es in der Praxis jedoch nicht um einfache Beziehungen, sondern um Beziehungen, die sehr komplex sein können. Idealerweise dient die Erfindung dem Auffinden und Anwenden von kausalen Beziehungen, da speziell solche Beziehungen es ermöglichen überprüfbare Schlussfolgerungen zu treffen oder Aussagen z.B. in Bezug auf die zu erwartende Qualität eines soeben bearbeiteten Werkstücks W.n zu machen (dieser Schritt wird hier als Bewertung von Werkstücken W.n bezeichnet).

Ziel einer geeigneten Korrelation ist es bei allen Ausführungsformen möglichst kausale Zusammenhänge sichtbar und/oder durch prozessorgesteuerte Auswertung nutzbar zu machen.

Bei allen Ausführungsformen kann eine Korrelation aber auch verwendet werden, um z.B. eine Aussage über die Richtung einer Beziehung treffen zu können (Beispiel für eine positive Korrelation: wenn die Temperatur T2 in Fig. 3 höher ist, dann ist auch die Maximalfrequenz der Fig. 4 höher).

Vorzugsweise können mit Hilfe einer geeigneten Korrelation Kriterien zur Bewertung (Bewertungskriterien BK genannt) der Qualität eines gefertigten Werkstücks W.n anhand der bei dessen Bearbeitung erfassten Zustandskombination der Maschinenparameter definiert werden.

Bei allen Ausführungsformen der Erfindung kann eine Unterteilung in mehr als zwei Gruppen erfolgen und/oder es können mehrere Bewertungskriterien BK zum Einsatz kommen.

Zum Auffinden einer geeigneten Korrelation bieten sich beispielsweise die folgenden Korrelationsverfahren an:
- Vollständige mehrdimensionale Zuordnung;
- Nutzung mathematischer Hilfsmittel der Korrelationsanalyse in (großen) Datenbeständen, z. B. der Formalen Begriffsanalyse (Formal Concept Analysis) zur Identifikation von "Begriffen" (typische Zuordnungen von Zustandskombinationen zu Bewertungskombinationen).

Gemäß Erfindung sind verschiedene Ansätze für die Auswahl der zu messenden Werkstücke W.n möglich. Vorzugsweise kommt bei allen Ausführungsformen eine Auswahl anhand einer der folgenden Strategien zur Anwendung:
- jedes Werkstück W.n, das zuvor die Schritte a) bis c) durchlaufen hat, wird ausgewählt, um dem Messverfahren 300 unterzogen zu werden. Es ist ein Nachteil dieses Ansatzes, dass der Zeit- und Kostenaufwand hoch ist. Daher kommt dieser Ansatz vorzugsweise nur am Anfang zu Anwendung, um möglichst schnell eine ausreichend große Datenbasis in der Datenbank 11 bereitstellen zu können.
- eine Teilmenge aller Werkstücke W.n, die zuvor die Schritte a) bis c) durchlaufen haben, wird ausgewählt, um dem Messverfahren 300 unterzogen zu werden, wobei vorzugsweise die Teilmenge von einer Software SW oder von einem Anwender vorgegeben wird.
- während eines ersten Zeitraumes Δ1, der zum Aufbau der Datenbank 11 dient, wird eine größere Anzahl der Werkstücke W.n, die zuvor die Schritte a) bis c) durchlaufen haben, ausgewählt (z.B. jedes zweite Werkstück), als während eines zweiten Zeitraumes Δ2, der zeitlich nach dem ersten Zeitraum Δ1 liegt. Während des zweiten Zeitraumes Δ2 wird dann z.B. nur noch jedes zehnte Werkstück einer Messung 300 unterzogen. Während des zweiten Zeitraumes Δ2 kann das Verfahren der Erfindung seine Vorteile zur Geltung bringen, da es der Einsatz des erfindungsgemäßen Verfahrens ermöglicht trotz einer kleinen Zahl von konkreten Messungen 300 Probleme frühzeitig zu erkennen. Tritt z.B. eine Zustandskombination auf, die deutlich dafür spricht, dass das soeben bearbeitete Werkstück wohl nicht der Spezifikation entsprechen wird (dies ist in Fig. 5 z.B. in den Zustandsboxen B2 und C2 der Fall), so kann z.B. eine der folgenden Maßnahmen - oder eine Kombination von mindestens zwei dieser Maßnahmen - getroffen werden:
   p1: Unterbrechung der Bearbeitung des betroffenen Werkstücks,
   p2: Korrektur der Bearbeitung des betroffenen Werkstücks,
   p3: Übergabe des betroffenen Werkstücks an eine Nachbearbeitungsvorrichtung,
   p4: Vornahme von Korrekturen an der Maschine, bevor weitere Werkstücke W.n bearbeitet werden.

Diese Maßnahmen betreffen primär die eigentliche Bearbeitung des/der Werkstücke W.n, respektive die Maschine M.m.

Die folgenden Maßnahmen betreffen das Messverfahren 300, das in einer Messvorrichtung 20 der Maschine M.m oder in einer Messmaschine 20 durchgeführt wird:
p5: Anpassung der Messstrategie,
p6: Änderung einer Einstellung der Meßvorrichtung (z.B. Nachjustieren).

Die genannten Maßnahmen p1 bis p6, die als Beispiele zu verstehen sind, können auch beliebig miteinander kombiniert werden.

Weiterhin kann die Auswahl anhand der folgenden Strategien erfolgen:
- ein Werkstück W.n, das zuvor die Schritte a) bis c) durchlaufen hat, wird z.B. dann ausgewählt, wenn bereits vorliegende Daten aus der Datenbank 11 anzeigen, dass das betroffene Werkstück W.n als Ausschuss-Teil AT qualifiziert werden könnte.
- Es ist aber auch möglich die Auswahl von Werkstücken W.n anhand des angesammelten Wissens der Datenbank 11 vorzunehmen. Im Folgenden wird dies anhand des Beispiels der Fig. 5 erläutert. Falls sich beim Aufzeichnen und Auswerten der Maschinenparameter Mp_{w.n} eines Werkstücks W.n ergibt, dass dieses z.B. in die Zustandsbox A2 fällt, so ist eine treffsichere Bewertung des Werkstücks W.n nicht möglich, da etwa 37% der Werkstücke W.n in dieser Zustandsbox A2 Gut-Teile GT und 63% Ausschuss-Teile AT sind. Da in diesem Fall keine eineindeutige Bewertung möglich ist, wird dieses Bauteil einem Messverfahren 300 unterzogen. Auf diesem Wege kann einerseits das betroffene Bauteil definitiv als Gut-Teil GT oder Ausschuss-Teil AT eingestuft werden. Ausserdem liefert das Messen dieses Werkstücks W.n direkte Angaben zum Erweitern der Datenbasis der Datenbank 11. Die zusätzlichen Daten, die auf diesem Wege sukzessive erfasst werden, können z.B. dazu führen, dass, wie bereits erwähnt, die Zustandsbox A2 in zwei Teilboxen unterteilt wird, um in Zukunft genauere Entscheidungen treffen zu können.

Ein übergeordnetes Ziel bei der Auswahl von Werkstücken W.n, die dem Messverfahren 300 unterzogen werden, ist es die Datenbasis 11 auszubauen und damit die Entscheidungsgenauigkeit anhand von Beurteilungskriterien BK zu verbessern.

Ein weiteres Ziel ist die Optimierung des gesamten Bearbeitungsprozesses. Eine solche Optimierung wird durch den Einsatz der Erfindung dadurch erreicht, dass on-the-fly eine treffsichere Unterscheidung z.B. von Gut-Teilen GT und Ausschuss-Teilen AT möglich ist.

Ausserdem produziert das Verfahren der Erfindung, wenn es in einer Fertigungsumgebung 100 eingesetzt wird, weniger Ausschuss, da bereits während der Bearbeitung von Werkstücken W.n Probleme erkennbar werden. Gegenüber konventionellen Verfahren, bei denen Produktionsabweichungen oder Fehler zum Teil erst dann erkannt werden, wenn routinemäßig ein Werkstück nachgemessen wird, kann eine erfindungsgemäss ausgestattete Fertigungsumgebung 100 direkter und somit schneller reagieren.

Vorzugsweise ist die Erfindung so ausgelegt, dass sie nicht nur eine beobachtende Funktion in einer Fertigungsumgebung 100 ausübt, sondern dass sie auch einen Eingriff in die Fertigungsumgebung 100 ermöglicht.

Ein solcher Eingriff kann bei allen Ausführungsformen der Erfindung vorzugsweise wie folgt vorgenommen werden. Anhand mindestens eines Korrekturkriteriums KK wird entschieden, ob ein Eingriff erforderlich ist. Ein mögliches Korrekturkriterium KK kann z.B. mit der Zuordnung der soeben erfassten Maschinenparameter Mp_{w.n} eines Werkstücks W.n verknüpft sein. Wenn z.B. das betroffene Werkstück W.n in eine Zustandsbox fällt, die eine Wahrscheinlichkeit von mehr als 80% hat (z.B. die Zustandsbox B2 der Fig. 5), dass es sich um ein Ausschuss-Teil AT handelt, so kann ein Korrekturverfahren 400 ausgelöst werden.

Fig. 6 zeigt eine entsprechende Ausführungsform der Erfindung. Die Fig. 6 baut auf der Fig. 2 auf. Daher wird auf die Beschreibung der Fig. 2 verwiesen. Zusätzlich zu den Elementen, Modulen oder Funktionsblöcken der Fig. 2, umfasst die Fig. 6 einen Funktionsblock 400, der das Korrekturverfahren 400 symbolisiert. Ein Werkstück W.n, dessen Maschinenparameter Mp_{w.n} beispielsweise in die Zustandsbox B2 der Fig. 5 fallen, wird umgehend einem Messverfahren 300 unterzogen. Wie in Fig. 6 zu erkennen ist, wird das Korrekturverfahren 400 dann über die Verbindung 401 mit (Meß-)Daten des Messverfahrens 300 versorgt. Das Korrekturverfahren 400 greift dann in das Bearbeitungsverfahren 200 ein, indem es z.B. einen Korrektur- oder Kompensationswert für die Maschine M.m vorgibt. Die Vorgabe eines Korrektur- oder Kompensationswertes wird in Fig. 6 durch die Verbindung 402 symbolisiert.

Das Korrekturverfahren 400 kann bei allen Ausführungsformen, wie in Fig. 6 gezeigt, z.B. von der Software SW ausgelöst und/oder überwacht werden. Das Auslösen des Korrekturverfahrens 400 ist in Fig. 6 durch den Pfeil 403 dargestellt.

Das Korrekturverfahren 400 kann bei allen Ausführungsformen aber z.B. auch von der Maschine M.m und/oder von der Messvorrichtung 20 ausgelöst und/oder überwacht werden.

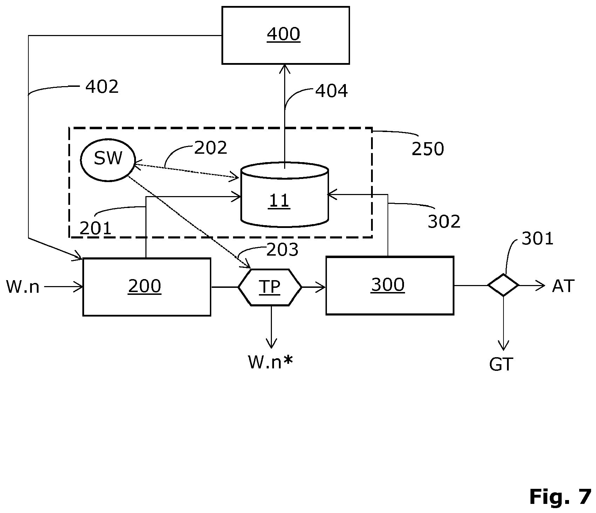

Fig. 7 zeigt eine andere Ausführungsform der Erfindung, bei welcher das Korrekturverfahren 400 anhand der aufgebauten Wissensbasis der Datenbank 11 ausgelöst/betrieben wird. In Fig. 7, die wiederum auf den Figuren 2 und 6 und deren Beschreibung aufbaut, ist dies durch den Pfeil 404 dargestellt, der von der Datenbank 11 zu dem Korrekturverfahren 400 verläuft. Der Pfeil 404 ist jedoch nur symbolisch zu verstehen, da die Datenbank 11 an sich keine Aktionen auslöst. Die Datenbank 11 enthält die Sammlung der zuvor erfassten Daten. Als übergeordnete Intelligenz kann bei einer Ausführungsform nach Fig. 7 z.B. die Software SW dienen. Die Software SW erkennt anhand von Daten, die in der Datenbank 11 liegen, ob und in welcher Art und Weise eine Korrektur des Bearbeitungsverfahrens 200 erforderlich ist. Der Pfeil 402 symbolisiert das Vornehmen der Korrektur.

**Bezugszeichen:**

| | |
|---|---|
| Rechner / Computer / Prozessor | 10 |
| Datenbank / Speichermedium | 11 |
| Bildschirm / Anzeige | 12 |
| | |
| Werkstück-Handhabung | 15, 16 |
| | |
| Messmaschine / Messvorrichtung | 20 |
| | |
| Vorrichtung / Gesamtsystem / Fertigungsumgebung | 100 |
| | |
| Verfahren | 200 |
| Pfeil | 201 |
| Pfeil | 202 |
| Pfeil | 203 |
| | |
| Metaebene | 250 |
| | |
| Messverfahren | 300 |
| Verzweigung | 301 |
| Pfeil | 302 |
| | |
| Korrekturverfahren | 400 |
| Verbindung | 401 |
| Verbindung | 402 |
| Verbindung | 403 |
| Verbindung | 404 |
| | |
| Ausschuss-Teil | AT |
| Bewertungskriterien | BK |
| Zeitraum | Δt |
| Zeitraum | Δ1, Δ2 |
| Gut-Teil | GT |
| Kommunikationsverbindung | K1, K2, K3, etc. |
| Frequenzverlauf | Kf |
| Korrekturkriterium | KK |
| Temperaturverlauf | KT |
| Mittelwert des Temperaturverlaufs | K̅T̅ |
| ganze Zahl | m |
| Bearbeitungsmaschine | M.m |
| Maschinenparameter | Mp |
| Maschinenparameter des Werkstücks W.n | Mp_{w.n} |
| ganze Zahl | n |
| Maßnahmen | p1, p2 etc. |

| Zeit | t |
|---|---|
| Temperatur in Abhängigkeit von der Zeit | T(t) |
| Temperaturwerte | T1, T2, T3 |
| Triggerpunkt | TP |
| Werkstücke | W.n |
| Werkstücke (nicht gemessen) | W.n* |

## Patentansprüche

1. Verfahren (200) zur automatisierten Bearbeitung von Werkstücken (W.n), mit den folgenden Schritten:
a) spanende Bearbeitung eines ersten Werkstücks (W.n) in einer Bearbeitungsmaschine (M.m),
b) Erfassen von mindestens 2 Maschinenparametern (M_{pw.n}) der Bearbeitungsmaschine (M.m) während der spanenden Bearbeitung des ersten Werkstücks (W.n),
c) Speichern dieser Maschinenparameter (Mp_{w.n}) unter Zuordnung zu dem ersten Werkstück (W.n),
d) Wiederholen der Schritte a) bis c) für eine Anzahl von n Werkstücken (W.n);
nach einem der Schritte a) bis d), oder zu einem späteren Zeitpunkt, Auslösen eines Prüfungsverfahrens mit den folgenden Schritten:
M1. Auswahl mindestens eines der Werkstücke (W.n),
M2. Durchführen einer automatisierten Prüfung mindestens dieses einen ausgewählten Werkstücks (W.n),
M3. Durchführen einer prozessorgesteuerten Bewertung der automatisierten Prüfung, um das ausgewählte Werkstück (W.n) in eine von mindestens zwei der folgenden Gruppen einteilen zu können: Gut-Teil (GT), Ausschuss-Teil (AT).

2. Verfahren nach Anspruch 1, **dadurch gekennzeichnet, dass** eine automatisierte Messung (300) als automatisierte Prüfung durchgeführt wird.

3. Verfahren nach Anspruch 1, **dadurch gekennzeichnet, dass** die automatisierte Prüfung unter Einsatz einer Wissensbasis, die vorzugsweise in einer Datenbank (11) bereitgestellt wird, vorgenommen wird.

4. Verfahren nach Anspruch 2, **dadurch gekennzeichnet, dass** die Maschinenparameter (M_{pw.n}) mehrerer Werkstücke (W.n) und die Daten, die durch die automatisierte Messung dieser Werkstücke (W.n) erfasst wurden, einer Korrelationsberechnung unterzogen werden, um mindestens ein Bewertungskriterium (BK) für die prozessorgesteuerte Bewertung des Verfahrensschritts M3 bereit zu stellen.

5. Verfahren nach Anspruch 2, **dadurch gekennzeichnet, dass** die Maschinenparameter (M_{pw.n}) mehrerer Werkstücke (W.n) und die Daten, die durch die automatisierte Messung dieser Werkstücke (W.n) erfasst wurden, einer Datenaufbereitung unterzogen werden, um anhand von Korrelationen mindestens ein Bewertungskriterium (BK) für die prozessorgesteuerte Bewertung des Verfahrensschritts M3 bereit zu stellen.

6. Verfahren nach Anspruch 1, 2, 3 oder 4, **dadurch gekennzeichnet, dass** in einem weiteren Verfahrensschritt M4 eine prozessorgesteuerte Zuordnung zwischen den mindestens 2 Maschinenparametern (M_{pw.n}) des ausgewählten Werkstücks (W.n) und der Bewertung dieses Werkstücks (W.n) vorgenommen und in einer Datenbank (11) gespeichert wird.

7. Verfahren nach Anspruch 1, 2, 3 oder 4, **dadurch gekennzeichnet, dass**
- mindestens einer der mindestens 2 Maschinenparameter (Mp_{w.n}), der im Schritt b) für jeweils ein Werkstück (W.n) erfasst wird, als Mittelwert über die spanende Bearbeitung im Schritt a) erfasst wird, oder
- mindestens einer der mindestens 2 Maschinenparameter (Mp_{w.n}), der im Schritt b) für jeweils ein Werkstück (W.n) erfasst wird, in Form eines Intervalls (Min, Max) über die spanende Bearbeitung im Schritt a) erfasst wird, oder
- mindestens einer der mindestens 2 Maschinenparameter (Mp_{w.n}), der im Schritt b) für jeweils ein Werkstück (W.n) erfasst wird, in Form mehrerer Meßwerte über die spanende Bearbeitung im Schritt a) erfasst wird.

8. Verfahren nach Anspruch 1, 2, 3, 4 oder 5, **dadurch gekennzeichnet, dass** die Bewertung im Schritt M3
- anhand einer Werkstück-Spezifikation vorgenommen wird, oder
- anhand von Solldaten vorgenommen wird, oder
- anhand mindestens eines Bewertungskriteriums (BK) oder einer Kombinationen von Bewertungskriterien vorgenommen wird,
um eine Unterscheidung von Gut-Teilen (GT) und Ausschuss-Teilen (AT) zu ermöglichen.

9. Verfahren nach Anspruch 2, 4 oder 5, **dadurch gekennzeichnet, dass** die Auswahl des mindestens einen der Werkstücke (W.n) anhand einer der folgenden Strategien erfolgt:
- jedes Werkstück (W.n), das zuvor die Schritte a) bis c) durchlaufen hat, wird ausgewählt, um dem Messverfahren (300) unterzogen zu werden;
- eine Teilmenge aller Werkstücke (W.n), die zuvor die Schritte a) bis c) durchlaufen haben, wird ausgewählt, um dem Messverfahren (300) unterzogen zu werden;
- während eines ersten Zeitraumes (Δ1), der zum Aufbau der Datenbank (11) dient, wird einer größere Anzahl der Werkstücke (W.n), die zuvor die Schritte a) bis c) durchlaufen haben, ausgewählt, als während eines zweiten Zeitraumes (Δ2), der zeitlich nach dem ersten Zeitraum (Δ1) liegt;
- ein Werkstück (W.n), das zuvor die Schritte a) bis c) durchlaufen hat, wird dann ausgewählt, wenn bereits vorliegende Daten aus der Datenbank (11) anzeigen, dass das betroffene Werkstück (W.n) als Ausschuss-Teil (AT) qualifizieren könnte.

10. Verfahren nach einem der Ansprüche 1 bis 9, **dadurch gekennzeichnet, dass** von Zeit zu Zeit eine rechnerische Analyse, vorzugsweise eine Korrelationsanalyse, anhand einer Datenbank oder eines Speichermediums (11) vorgenommen wird, um die Menge der Daten, die in dieser Datenbank oder dem Speichermedium (11) gespeichert ist, für einen schnelleren Zugriff aufzubereiten.

11. Verfahren nach einem der Ansprüche 1 bis 9, **dadurch gekennzeichnet, dass** ein Korrekturverfahren (400) ausgelöst und durchgeführt wird, um Anpassungen vorzunehmen, die bei der automatisierten Bearbeitung von zukünftigen Werkstücken (W.n) Anwendung finden.

12. Verfahren nach Anspruch 11, **dadurch gekennzeichnet, dass** das Korrekturverfahren (400) von einer Software (SW) und/oder von der Bearbeitungsmaschine (M.m) und/oder von einer Messvorrichtung oder Messmaschine (20) ausgelöst wird.

13. Fertigungsumgebung (100) mit
- mindestens einer Bearbeitungsmaschine (M.m),
- mindestens einer Messvorrichtung oder Messmaschine (20),
- mindestens einer Datenbank oder einem Speichermedium (11), und mit einem Rechner, Computer oder Prozessor (10), der zum Steuern der folgenden Verfahrensschritte der Fertigungsumgebung (100) programmiert ist:
a) spanendes Bearbeiten eines ersten Werkstücks (W.n) in einer der Bearbeitungsmaschinen (M.m),
b) Erfassen von mindestens 2 Maschinenparametern (M_{pw.n}) der entsprechenden Bearbeitungsmaschine (M.m) während der spanenden Bearbeitung des ersten Werkstücks (W.n),
c) Speichern dieser Maschinenparameter (M_{pw.n}) in der Datenbank oder dem Speichermedium (11), wobei das Speichern unter Zuordnung zu dem ersten Werkstück (W.n) erfolgt,
d) Wiederholen der Schritte a) bis c) für eine Anzahl von n Werkstücken (W.n);
nach einem der Schritte a) bis d), oder zu einem späteren Zeitpunkt, Auslösen eines Prüfverfahrens mit den folgenden Schritten:
M1. Auswahl mindestens eines der Werkstücke (W.n),
M2. Durchführen einer automatisierten Prüfung mindestens dieses einen ausgewählten Werkstücks (W.n) durch die Messvorrichtung oder die Messmaschine (20),
M3. Durchführen einer prozessorgesteuerten Bewertung der automatisierten Prüfung, um das ausgewählte Werkstück (W.n) in eine von mindestens zwei der folgenden Gruppen einteilen zu können: Gut-Teil (GT), Ausschuss-Teil (AT).

14. Vorrichtung nach Anspruch 13, **dadurch gekennzeichnet, dass** eine automatisierte Messung (300) als automatisierte Prüfung durchgeführt wird.

15. Vorrichtung nach Anspruch 13, **dadurch gekennzeichnet, dass** die automatisierte Prüfung unter Einsatz einer Wissensbasis, die vorzugsweise in der Datenbank oder in dem Speichermedium (11) bereitgestellt wird, vorgenommen wird.
